Europäisches Patentamt

European Patent Office

Office européen des brevets

(11) Veröffentlichungsnummer: **0 252 384**
**B1**

(12) **EUROPÄISCHE PATENTSCHRIFT**

(45) Veröffentlichungstag der Patentschrift:
04.04.90

(21) Anmeldenummer: 87109221.9

(22) Anmeldetag: 26.06.87

(51) Int. Cl.⁴: **B60K 28/16**

(54) Verfahren zum Erfassen des Schlupfzustandes.

(30) Priorität: 11.07.86 DE 3623412

(43) Veröffentlichungstag der Anmeldung:
13.01.88 Patentblatt 88/2

(45) Bekanntmachung des Hinweises auf die Patenterteilung:
04.04.90 Patentblatt 90/14

(84) Benannte Vertragsstaaten:
DE ES FR GB IT

(56) Entgegenhaltungen:
EP-A- 0 053 033
DE-A- 2 832 739
DE-A- 3 416 723
DE-A- 3 420 411
DE-B- 2 301 102
DE-C- 3 127 301

(73) Patentinhaber: AUDI AG,
Auto-Union-Strasse 1 Postfach 220,
D-8070 Ingolstadt(DE)

(72) Erfinder: Sterler, Georg, Dipl.-Ing., Mozartstrasse 20,
D-8071 Grossmehring(DE)

(74) Vertreter: Le Vrang, Klaus, AUDI AG
Postfach 220 Patentabteilung I/EQP,
D-8070 Ingolstadt(DE)

**Beschreibung**

Die Erfindung betrifft ein Verfahren zum Erfassen des Schlupfzustandes von angetriebenen Kraftfahrzeugrädern gemäß dem Oberbegriff des Anspruchs 1.

Es ist bekannt, den Schlupf von angetriebenen Kraftfahrzeugrädern zu regeln, um damit Instabilitäten im Fahrverhalten abzuwenden. Kraftfahrzeuge, die über nicht angetriebene, also mitlaufende Räder verfügen, ermöglichen ein einfaches Erkennen des Schlupfes der angetriebenen Räder durch Auswerten der Differenzgeschwindigkeit zwischen angetriebenem und nicht angetriebenem Rad.

Aus der DE-A 2 832 739 ist eine Anordnung bekannt, bei der die Drehzahl der Antriebsräder erfaßt wird. Die Differenz zwischen den Antriebsrädern wird als Schlupfsignal ausgewertet, da davon ausgegangen wird, daß stets nur ein Antriebsrad durchdreht. Bei gleichzeitigem Durchdrehen der Antriebsräder ist dieses Verfahren nicht einsetzbar.

Die DE-C 3 127 301 und die DE-A 3 420 411 schlagen Antischlupfregelungen vor, bei denen bei Durchdrehen des Rades dieses gebremst wird und ggf. auch noch das Motormoment zurückgenommen wird. Die Verstellung des Schlupfes geschieht auch hier anhand von Drehzahlunterschieden zwischen den Rädern.

Die EP-A 53 033 schlägt eine Schaltung vor, mit der zur Anzeige gebracht wird, wenn ein Rad durchdreht. Auch diese Anzeige geschieht aufgrund von Drehzahlunterschieden.

Bei allradangetriebenen Fahrzeugen ist eine derartige Auswertung nicht möglich, da bei gleichzeitigem Schlupf aller vier angetriebener Räder kein Signal der Geschwindigkeit des Fahrzeuges über Grund aufgrund eines mitlaufenden Rades zur Verfügung steht.

Als Lösungsmöglichkeiten, die Geschwindigkeit eines allradgetriebenen Fahrzeuges zu ermitteln, bieten sich folgende Prinzipien an:

1. Messung der Geschwindigkeit über Grund, beispielsweise mit einem Dopplerradar. Das Dopplerradar registriert allerdings nur die Bewegungen des Fahrzeuges in Längsachse, im Falle der Kurvenfahrt mit Drift ist die Messung fehlerhaft. Hierzu wäre eine Messung der Fahrzeuggeschwindigkeit in Längs- und in Querachse notwendig, was allerdings einen erheblichen Aufwand bedeutet.

2. Weiterhin ist es möglich, das Beschleunigen der Räder einerseits zu messen, und andererseits ein Rechenmodell aufzustellen, in das das Motordrehmoment, die Trägheitsmassen und das Fahrwiderstandsdiagramm eingeben werden. Übersteigt die Winkelbeschleunigung der Räder den berechneten Wert, wird das Übersteigen als Schlupf ausgewertet.

Dieses Verfahren liefert im allgemeinen gute Ergebnisse, beim Fahren auf Eis kann es jedoch vorkommen, daß die Drehzahlen aller vier Räder langsam hochgezogen werden, ohne daß der Unterschied zwischen berechneten und tatsächlichen Radbeschleunigungen so groß wird, daß die Ansprechschwelle erreicht wird.

3. Weiterhin ist es möglich, die Fahrzeugbeschleunigung ständig zu messen und auf diese Weise die Geschwindigkeit zu errechnen. Die Fahrzeuggeschwindigkeit wird dabei durch Integration der Fahrzeugbeschleunigung errechnet, wobei der Messung und Berechnung eine gewisse Fehlerquote anhaftet, die sich über längeren Betrieb hin soweit erhöht, daß ein aussagekräftiger Wert nicht mehr vorhanden ist.

Aufgabe der Erfindung ist es, ein einfaches Verfahren zur Schlupferkennung vorzuschlagen.

Die Aufgabe wird gelöst durch den Hauptanspruch.

Bei der Erfindung wird ein von den vorgezeichneten Ideen abweichender Weg eingeschlagen. Es wird darauf verzichtet, die Realgeschwindigkeit des Fahrzeuges zu messen, und diese Geschwindigkeit mit der Raddrehzahl zu vergleichen, um auf diese Weise den Schlupf zu ermitteln. Vielmehr ist erkannt worden, daß mit dem Auftreten von Schlupf stets Schwingungen des Antriebsstranges verbunden sind, und zwar zum einen mechanische Schwingungen, also ein Vibrieren der Antriebswellen und der angetriebenen Räder, und andererseits Drehzahlschwankungen des angetriebenen Rades, die vermutlich mit den mechanischen Schwingungen in Verbindung stehen.

Diese Schwingungen lassen sich auswerten, und mit Auftreten dieser Schwingungen wird ein Schlupfsignal abgegeben, das durch entsprechende Eingriffe die Drehzahl des die Schwingungen aufweisenden Rades herabsetzt und somit den Schlupf abbaut.

Zur Erfassung der Schwingungen ist es möglich, die mechanischen Schwingungen des Antriebsstranges zu erfassen. Dies kann beispielsweise durch Piezoelemente oder andere Sensoren, die auf mechanische Schwingungen ansprechen, geschehen.

Bevorzugterweise wird man jedoch die Drehzahl des Rades überwachen, denn das Auftreten von Schlupf stellt sich durch periodische Drehzahlschwankungen dar, die mit einer typischen Frequenz auftreten. Die Unterschiede zwischen den Drehzahlen, also der Unterschied zwischen den Maximal- und Minimalwerten in dieser Schwankungen, kann bis zu einem Wert betragen, der einer Geschwindigkeit von 20 km/h entspricht. Die Schwingungsfrequenz, die selbstverständlich vom Fahrzeugtyp und seiner Antriebsart abhängt, beträgt typischerweise 10 bis 15 Hz.

In an sich bekannter Weise wird bei Auftreten des Schlupfsignales Eingriff genommen auf die Drehzahl des Rades, beispielsweise, indem die Räder durch einen Bremseingriff wie der verzögert werden. Auch ein Herabsetzen der Motorleistung durch ein Verstellen der Drosselklappe oder durch eine Verlegung des Zündzeitpunktes ist denkbar. Auch kann die Einspritzmenge des eingespritzten Kraftstoffes verringert werden. Selbstverständlich können diese verschiedenen Maßnahmen auch miteinander kombiniert werden, um ein möglichst schnelles Abbauen des Schlupfes zu erreichen. Liegt kein Schlupfsignal mehr vor, ist die Bodenhaftung der Räder wieder hergestellt, und die Motorleistung kann wieder erhöht werden.

Mit der Überwachung jedes einzelnen Rades auf Schwingungen hin lassen sich auch Kurvenfahrten erkennen, bei denen das kurveninnere, weniger belastete Rad bei homogenen Fahrbahnverhältnissen als erstes durchdreht. Das kurvenäußere Rad behält aufgrund der höheren Belastung noch seine Bodenhaftung, so daß durch eine Reduzierung der Motorleistung bei Durchdrehen des kurveninneren Rades auch dieses Rad wieder stabilisiert wird, so daß ein für den Fahrer gefährlich werdender Schlupf gar nicht auftreten kann, da eines der Räder auf der Achse stets die Seitenführung gewährleistet.

Es ist durchaus möglich, das Schlupfregelverhalten in Kurven anders zu gestalten als bei Geradeausfahrt. Während bei Kurvenfahrten in der oben geschilderten Weise der Schlupf vermieden wird, läßt sich bei Geradeausfahrt zur optimalen Traktion und Beschleunigung stets ein leichter Schlupf aufrechterhalten. Die Differenzierung zwischen Kurvenfahren einerseits und Geradeausfahrt andererseits ist dabei entweder über die Ermittlung der Differenzdrehzahl zwischen kurveninnerem und kurvenäußerem Rad möglich, oder aber auch über einen Lenkwinkelsensor.

Das beschriebene Verfahren hat seine besonderen Vorteile im Rahmen eines allradangetriebenen Fahrzeuges, es ist jedoch selbstverständlich möglich, auf genau die gleiche Weise die angetriebenen Räder eines Fahrzeuges zu überwachen, das auch über nicht angetriebene Räder verfügt. In diesem Falle kann auf den Vergleich der Drehzahl zwischen angetriebenen und nicht angetriebenen Rädern verzichtet werden, die Schlupferkennung erfolgt durch die Schwingungsüberwachung.

Die zur Durchführung des Verfahrens notwendige Ausrüstung besteht in den Raddrehzahlfühlern, wie sie für Antiblockiersysteme heutzutage Serienstand sind. Von Flanke zu Flanke des Radsensorsignales berechnet ein Mikroprozessor die Periodendauer, aus der rechnerisch eine Schwingungsfrequenz und auch eine Schwingungsamplitude berechnet werden kann. Überschreitet die Schwingungsamplitude in der typischen Frequenz einen gewissen oberen Grenzwert, wird von dem Mikroprozessor her ein Schlupfsignal weitergegeben, um die vorne beschriebenen Maßnahmen zu veranlassen.

## Patentansprüche

1. Verfahren zum Erfassen des Schlupfzustandes der von einer Brennkraftmaschine über ein Getriebe und ein Differential angetriebenen Antriebsräder eines Kraftfahrzeuges, wobei den Rädern Raddrehzahlfühler zugeordnet sind, deren Signal ausgewertet wird, dadurch gekennzeichnet, daß periodische Drehzahlschwankungen in einem vorgegebenen Frequenzbereich erfaßt werden, und bei Auftreten derartiger Drehzahlschwankungen ein Schlupfsignal abgegeben wird.

2. Verfahren nach Anspruch 1, dadurch gekennzeichnet, daß die periodischen Drehzahlschwankungen mit einer Schwingungsfrequenz von 10 bis 15 Hz ausgewertet werden.

3. Verfahren nach Anspruch 1 oder 2, dadurch gekennzeichnet, daß zusätzlich zur Frequenz der periodischen Schwankungen die Größe der Schwankung erfaßt und ausgewertet wird.

## Claims

1. Method for detecting the slip status of the driving wheels, driven by an internal combustion engine through a transmission system and a differential gear, of a motor vehicle, in which wheel rotational speed sensors, the signals from which are evaluated, are assigned to the wheels, characterized in that periodic rotational speed fluctuations in a predetermined frequency range are detected and a slip signal is given when such rotational speed fluctuations occur.

2. Method according to Claim 1, characterized in that the periodic rotational speed fluctuations with oscillation frequencies of 10 to 15 Hz are evaluated.

3. Method according to Claims 1 or 2, characterized in that the amplitude of the fluctuation is detected and evaluated in addition to the frequency of the periodic fluctuations.

## Revendications

1. Procédé pour la détection de la situation de patinage des roues motrices d'un véhicule automobile entraînées par un moteur à combustion interne par l'intermédiaire d'une boîte de vitesses et d'un différentiel, roues auxquelles sont associés des capteurs de vitesse de rotation de la roue dont le signal est évalué, caractérisé en ce que des fluctuations périodiques de la vitesse de rotation dans une gamme de fréquences prédéfinie sont détectées, et en ce qu'un signal de patinage est émis lorsque de telles fluctuations de la vitesse de rotation se produisent.

2. Procédé selon la revendication 1, caractérisé en ce que les fluctuations périodiques de la vitesse de rotation ayant une fréquence de fluctuation de 10 à 15 Hz sont évaluées.

3. Procédé selon la revendication 1 ou 2, caractérisé en ce qu'en plus de la fréquence des fluctuations périodiques, la grandeur de la fluctuation est détectée et évaluée.